# EUROPÄISCHE PATENTSCHRIFT

(11) **EP 0 542 041 B1**
(45) Veröffentlichungstag und Bekanntmachung des Hinweises auf die Patenterteilung: **27.12.1995**
(21) Anmeldenummer: 92118445.3
(22) Anmeldetag: 28.10.1992
(51) Int. Cl.: G01M 3/20, G01M 3/26, E02D 31/00

(54) **Einrichtung und Verfahren zum Überwachen von zwei voneinander beabstandeten Abdichtungen**
Procedure and device for monitoring the space between two sealing elements
Procédé et dispositif de surveillance de l'espace entre deux éléments de scellement

(30) Priorität: 14.11.1991 DE 4137498
(43) Veröffentlichungstag der Anmeldung: 19.05.1993
(73) Patentinhaber: SIEMENS AKTIENGESELLSCHAFT, 80333 München (DE)
(72) Erfinder: Ruthrof, Klaus, Dipl.-Ing. (FH), W-8500 Nürnberg (DE); Jax, Peter, Dr., W-8520 Erlangen (DE); Bode, Karl-Heinz, W-8000 München 21 (DE); Günther, Klaus, Dr., W-2000 Hamburg 76 (DE)

(56) Entgegenhaltungen:
- DE-U- 9 107 693
- US-A- 3 842 659
- US-A- 4 796 676
- US-A- 5 076 728

## Beschreibung

Die Erfindung betrifft eine überwachbare Einrichtung zum Abdichten eines Körpers, insbesondere einer Mülldeponie, mit zwei voneinander beabstandeten Abdichtungen, zwischen denen sich ein Kontrollraum befindet, der bis auf Anschlüsse geschlossen ist, wobei eine erste und eine zweite Durchführung im Kontrollraum durch einen permeablen Kanal oder Schlauch für ein Transportmedium verbunden sind, an den ausgangsseitig ein Sensor für einen zu überwachenden Stoff angeschlossen ist. Die Erfindung betrifft auch ein Verfahren zum Überwachen einer solchen Einrichtung zum Abdichten eines Körpers.

Aus dem deutschen Gebrauchsmuster G 91 07 693.5 ist ein Element zum Abdichten und Überwachen eines Körpers, insbesondere einer Abfalldeponie, bekannt. Dieses Element besteht aus zwei beabstandeten Abdichtungen. Zwischen diesen Abdichtungen befindet sich ein permeabler Kanal oder Schlauch mit einer endseitigen Eintrittsöffnung und einer endseitigen Austrittsöffnung für ein Transportmedium. Unter Freilassung dieser Öffnungen sind die beiden Abdichtungen an ihren Rändern dicht miteinander verbunden. In die Eintrittsöffnung wird in vorgegebenen Zeitabständen ein Transportmedium eingespeist. Die Austrittsöffnung ist mit einem Sensor verbunden. Sollte eine der beiden Abdichtungen ein Leck aufweisen, gelangt in der Regel von außen ein Stoff, z.B. ein Schadstoff, in den Kanal oder Schlauch. Mit dem Transportmedium wird dieser Stoff zum Sensor transportiert, der den Stoff registriert. Vom Zeitpunkt des Eintreffens des Stoffes am Sensor läßt sich bei bekannter Strömungsgeschwindigkeit des Transportmediums auf den Leckageort schließen.

Zur Leckortung wird dabei von einem Leckortungssystem Gebrauch gemacht, das z.B. aus der DE-PS 24 31 907 bekannt ist.

Mit der bekannten Einrichtung läßt sich ein Leck in einer der beiden Abdichtungen leicht erkennen, wenn durch das Leck von außen ein Stoff eindringt, der ein Gas ist. Es muß dann nur ein geeigneter Gassensor eingesetzt werden. Falls der zu überwachende Stoff eine Flüssigkeit, insbesondere Wasser oder eine wässrige Lösung ist, gestaltet sich die Bestimmung des Leckortes schwierig. Damit die eingedrungene Flüssigkeit im Transportmedium erkannt werden kann, ist es nämlich notwendig, daß das Transportmedium weitgehend trocken ist. Falls das Transportmedium mit Wasser gesättigt wäre, könnte durch ein Leck eingedrungenes Wasser selbst durch einen geeigneten Wassersensor nicht registriert werden. Wenn der Kontrollraum aber weitgehend trocken ist, bedeutet das Eindringen selbst einer kleinen Wassermenge eine deutliche lokal begrenzte Änderung des Wassergehaltes im Kontrollraum. Diese Wassermenge kann dann mit dem Transportmedium zum Sensor gebracht werden. Da das Transportmedium in regelmässigen Abständen eingespeist wird, läßt sich aus dem Zeitpunkt des Eintreffens des Wassers am Sensor auf den Leckageort schließen.

Einen trockenen Kontrollraum aufrechtzuerhalten, ist technisch aufwendig. Es müssen im Kontrollraum Trockenmittel eingesetzt werden, die sogar Feuchtigkeit aus dem Transportmedium aufnehmen. Sollte der Kontrollraum zur mechanischen Stabilität ein gas- und flüssigkeitsdurchlässiges Medium enthalten, muß auch dieses Medium trocken gehalten werden.

Beim Einsatz verschiedener Sensoren können bei der bekannten Einrichtung unterschiedliche Stoffe detektiert werden, die durch ein Leck in einer der Abdichtungen in den Kontrollraum eingedrungen sein können. Methan weist beispielsweise auf ein Leck in der unteren Abdichtung hin, während Wasser ein Leck in der oberen Abdichtung vermuten läßt. Um einen Sensor für Wasser betreiben zu können, muß jedoch der Kontrollraum im ungestörten Fall sehr trocken sein, was den Einsatz von Trockenmitteln notwendig macht. Falls das Leck so klein ist, daß von außen keine Stoffe in den Kontrollraum eindringen, ist das mit bisher bekannten Methoden nicht zu detektieren.

Der Erfindung lag die Aufgabe zugrunde, eine überwachbare Einrichtung zum Abdichten eines Körpers anzugeben, bei der erkannt werden kann, ob ein Leck in der oberen oder in der unteren Abdichtung vorhanden ist. Darüber hinaus soll auch ein sehr kleines Leck, durch das noch keine Stoffe eindringen, zu erkennen sein. Es soll auch ein geeignetes Verfahren zum Überwachen einer solchen Einrichtung angegeben werden.

Die erstgenannte Aufgabe wird gemäß der Erfindung dadurch gelöst, daß bei einer Einrichtung der eingangs genannten Art der Sensor für ein im Körper vorhandenes Gas empfindlich ist, daß im Kontrollraum ein Füllstandsmesser für Flüssigkeit angeordnet ist und daß an den Kontrollraum eine Pumpe und ein Druckmesser angeschlossen sind.

Die Pumpe und der Druckmesser können jeweils an einer verschließbaren Öffnung des Kontrollraums angeschlossen sein.

Wenn im Sensor ein im Körper noch vorhandenes Gas, beispielsweise Methan, registriert wird, muß ein Leck in der unteren Abdichtung vorliegen, die dem Körper zugewandt ist. Wenn der Füllstandsmesser einen erhöhten Flüssigkeitsstand anzeigt, muß ein Leck in der oberen Abdichtung vorliegen, da dann von außen Wasser eingedrungen sein muß. Dieses Wasser ist in der Regel Regenwasser. Indem der Kontrollraum verschlossen wird und mit der Pumpe ein Unterdruck im Kontrollraum erzeugt wird ist es möglich, selbst sehr kleine Lecks zu erkennen. Der Druck außerhalb des Kontrollraumes ist nämlich nach Absenken des Druckes im Kontrollraum relativ groß, so daß selbst durch ein sehr kleines Leck, das sonst durch Material einer mineralischen Dichtung verschlossen wäre, Gas oder Flüssigkeit in den Kontrollraum eindringt. Der dadurch im Kontrollraum bewirkte Druckanstieg wird mit dem Druckmesser durch eine Überwachung der zeitlichen Druckänderung registriert.

Beispielsweise ist eine Lanze vorgesehen, die außerhalb des Kontrollraums einer der Abdichtungen, insbesondere der oberen Abdichtung, zugewandt zum Zuführen von Tracergas angeordnet werden kann. An die zweite Durchführung ist ein zusätzlicher Sensor für das Tracergas angeschlossen. Wenn mit dem Füllstandsmesser das Eindringen von Flüssigkeit in den Kontrollraum registriert wird, wird Tracergas in die Nähe der Abdichtung gebracht, in der ein Lack vermutet wird. Das Tracergas wird dann durch das Leck, durch das auch schon das Wasser eingedrungen ist, in den Kontrollraum und in den permeablen Kanal oder Schlauch gelangen. Der Zeitpunkt des Eintreffens des Tracergases am Sensor gibt dann einen Hinweis auf den Ort des Lecks. Eine entsprechend genaue Leckbestimmung bei Einsatz eines Wassersensors ist nur dann möglich, wenn der Kontrollraum im ungestörten Fall sehr trocken ist. Sonst würde ein Wassereinbruch keine meßbare Erhöhung der Wassermenge am Sensor bewirken. Durch den Einsatz des Tracergases wird der Vorteil erzielt, daß der Kontrollraum nicht durch Trockenmittel trocken gehalten zu werden braucht.

Die zweite genannte Aufgabe, ein Verfahren anzugeben, wird gemäß der Erfindung dadurch gelöst, daß bei einem Verfahren der eingangs genannten Art an der zweiten Durchführung ein im Körper vorhandenes Gas überwacht wird, daß im Kontrollraum der Flüssigkeitsfüllstand gemessen wird und daß nach Ändern des Drucks im verschlossenen Kontrollraum die zeitliche Druckänderung überwacht wird.

Nach einer gezielt vorgenommenen Druckänderung im Kontrollraum wird dieser verschlossen. Sollte dann aber über einen Überwachungszeitraum hinweg eine deutliche Druckänderung zu erkennen sein, ist auf ein Leck zu schließen.

Mit dieser Kombination von Maßnahmen kann vorteilhafterweise ein Gaseinbruch von unten, ein Flüssigkeitseinbruch von oben und auch sogar ein kleines Leck, das sonst unerkannt bliebe, detektiert werden.

Beispielsweise wird bei erhöhtem Füllstand im Kontrollraum eine der Abdichtungen, insbesondere die obere Abdichtung, mit Tracergas beaufschlagt und es wird an der Austrittsöffnung das Austreten von Tracergas überwacht. Das Überwachen des Flüssigkeitsfüllstandes dient dabei nur dazu, das Eindringen von Flüssigkeit zu erkennen. Der Leckort wird in einem zweiten Verfahrensschritt anschließend mit Hilfe des Tracergases bestimmt.

Mit der Einrichtung und dem Verfahren nach der Erfindung wird der Vorteil erzielt, daß zwischen einem Leck in der oberen Abdichtung und einem Leck in der unteren Abdichtung unterschieden werden kann, daß beide Lecks mit gleich guter Genauigkeit zu lokalisieren sind und daß sogar ein noch sehr kleines Leck zuverlässig erkannt werden kann.

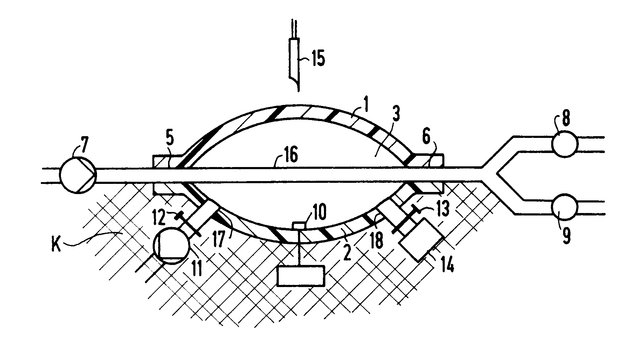

Die Einrichtung und das Verfahren nach der Erfindung werden anhand der Zeichnung näher erläutert. Die Zeichnung zeigt eine Einrichtung zum Abdichten eines Körpers mit Mitteln zur Lecküberwachung in den Abdichtungen.

Zum Abdichten eines Körpers K, insbesondere einer Mülldeponie, dient eine Einrichtung, die zwei Folien oder Abdichtungen 1 und 2 aufweist, zwischen denen sich ein Kontrollraum 3 befindet. Der Kontrollraum 3 ist bis auf Anschlüsse verschlossen. Zwischen einer ersten und einer zweiten Durchführung 5, 6 verläuft im Kontrollraum 3 ein permeabler Kanal oder Schlauch 16. Dieser kann mäanderförmig verlegt sein. Mittels einer Pumpe 7 wird in regelmäßigen Intervallen ein Transportmedium durch den Schlauch 16 hindurchgeführt. Sensoren 8 und 9 in Strömungsrichtung hinter der zweiten Durchführung 6 lassen Stoffe, die durch ein mögliches Leck in einer der Abdichtungen 1 oder 2 in den Kontrollraum 3 und den Schlauch 16 eingedrungen sind, erkennen.

Um ein Gas zu erkennen, das beispielsweise Methan ist und das aus einem unterhalb der Abdichtung 2 liegenden Körper K aus Müll durch ein Leck in der unteren Abdichtung 2 in den Kontrollraum 3 gelangt, ist ein geeigneter Sensor 8 vorhanden. Um dagegen durch ein Leck in der oberen Abdichtung 1 eindringendes Regenwasser zu erkennen, ist ein Füllstandsmesser 10 im unteren Teil des Kontrollraums 3 vorhanden.

Manchmal bilden sich sehr kleine Lecks in einer oder in beiden Abdichtungen 1, 2. Diese kleinen Lecks sind zunächst durch das der Abdichtung 1, 2 benachbarte Material verschlossen. Um schon solche sehr kleinen Lecks frühzeitig erkennen zu können, ist der Kontrollraum 3 an einer Öffnung 17 über eine Absperrarmatur (Ventil) 12 mit einer zusätzlichen Pumpe 11 verbunden, durch die der Druck im Kontrollraum 3 erniedrigt, d. h. ein Druckgefälle erzeugt wird. Nach Erreichen eines vorgegebenen, ausreichenden Unterdruckes im Kontrollraum 3 gegenüber der Umgebung wird die Armatur 12 geschlossen; mit einem Druckmesser 14, der an einer anderen Öffnung 18 über eine weitere Absperrarmatur (Ventil) 13 angeschlossen ist, wird dann untersucht, ob der Druck im Kontrollraum 3 ansteigt. Bedingt durch das erzeugte Druckgefälle würden selbst durch ein kleines Leck Gas oder Flüssigkeit in den Kontrollraum 3 eindringen und dort über einen Beobachtungszeitraum zu einem Druckanstieg führen. Die beiden Öffnungen 17, 18 werden auch zum zeitweisen Durchspülen des Kontrollraums 3 eingesetzt.

Damit das Innere des Kontrollraumes 3 nicht trocken gehalten zu werden braucht, wird eindringende Flüssigkeit nicht mit einem Wassersensor, sondern nur mit dem Füllstandsmesser 10 registriert. Auf diese Weise läßt sich aber nicht der genaue Ort des Lecks bestimmen. Dazu wird eine Lanze 15 eingesetzt, über die ein Tracergas in die Nähe des Teiles der Abdichtung 1 gebracht wird, der aufgrund der Anzeige des Füllstandsmessers 10 ein Leck aufweist. Das Tracergas, das dann in den Kontrollraum 3 und von dort in den permeablen Schlauch 16 eindringt, wird selbst bei feuchtem Kontrollraum 3 mit guter Genauigkeit durch einen geeigneten Sensor 9 erkannt.

Mit der geschilderten Kombination ist mit einfachen Mitteln ein zuverlässiges Erkennen von Lecks gewährleistet. Es kann sogar erkannt werden, in welcher der beiden Abdichtungen 2, 3 das Leck vorhanden ist. Für die Auswertung der Meßwerte sind alle Meßgeräte mit einer nicht dargestellten Auswerteeinheit verbunden.

## Patentansprüche

1. Überwachbare Einrichtung zum Abdichten eines Körpers (K), insbesondere einer Mülldeponie, mit zwei voneinander beabstandeten Abdichtungen (1, 2), zwischen denen sich ein Kontrollraum (3) befindet, der bis auf Anschlüsse geschlossen ist, wobei eine erste und eine zweite Durchführung (5, 6) im Kontrollraum (3) durch einen permeablen Kanal oder Schlauch (16) für ein Transportmedium verbunden sind, an den ausgangsseitig ein Sensor (8) für einen zu überwachenden Stoff angeschlossen ist, wobei der Sensor (8) für ein im Körper (K) vorhandenes Gas empfindlich ist,
**dadurch gekennzeichnet,** daß im Kontrollraum (3) ein Füllstandsmesser (10) für Flüssigkeit angeordnet ist und daß an den Kontrollraum (3) eine Pumpe (11) und ein Druckmesser (14) angeschlossen sind.

2. Einrichtung nach Anspruch 1,
**dadurch gekennzeichnet,** daß die Pumpe (11) und der Druckmesser (14) jeweils an einer verschließbaren Öffnung (17, 18) angeordnet sind.

3. Einrichtung nach einem der Ansprüche 1 oder 2,
**dadurch gekennzeichnet,** daß eine Lanze (15) vorhanden ist, die außerhalb des Kontrollraums (3) einer der Abdichtungen (1,2) zugewandt zum Zuführen von Tracergas angeordnet werden kann, und daß an die zweite Durchführung (6) ein zusätzlicher Sensor (9) für das Tracergas angeschlossen ist.

4. Verfahren zum Überwachen einer Einrichtung zum Abdichten eines Körpers, insbesondere einer Mülldeponie, wobei die Einrichtung zwei voneinander beabstandete Abdichtungen (1, 2) aufweist, zwischen denen sich ein Kontrollraum (3) befindet, der bis auf Anschlüsse geschlossen ist, wobei eine erste und eine zweite Durchführung (5, 6) im Kontrollraum (3) durch einen permeablen Kanal oder Schlauch (16) für ein Transportmedium verbunden sind, an dem ausgangsseitig ein zu überwachender Stoff bestimmt wird,
**dadurch gekennzeichnet,**
daß an der zweiten Durchführung (6) ein im Körper vorhandenes Gas überwacht wird, daß im Kontrollraum (3) der Flüssigkeitsfüllstand gemessen wird und daß nach Ändern des Drucks im verschlossenen Kontrollraum (3) die zeitliche Druckänderung überwacht wird.

5. Verfahren nach Anspruch 4, **dadurch gekennzeichnet,** daß bei erhöhtem Füllstand im Kontrollraum (3) eine der Abdichtungen (1, 2) mit Tracergas beaufschlagt wird, und daß an der Austrittsöffnung (6) das Auftreten des Tracergases überwacht wird.

## Claims

1. A monitorable device for sealing off a body (K), in particular a rubbish dump, having two mutually spaced-apart seals (1, 2) defining a control chamber (3) therebetween which is closed except for connections, a first and a second duct (5, 6) in the control chamber (3) communicating by means of a permeable channel or hose (16) for a transport medium, and a sensor (8) for a substance to be monitored being connected to an outlet side of the channel or hose, the sensor (8) being sensitive to a gas present in the body (K), characterised in that a level gauge (10) for liquid is arranged in the control chamber (3) and a pump (11) and a pressure gauge (14) are connected to the control chamber (3).

2. A device according to claim 1, characterised in that the pump (11) and the pressure gauge (14) are connected in each case to a closable opening (17, 18).

3. A device according to one of claims 1 or 2, characterised in that a lance (15) for supplying tracer gas is provided, which can be arranged outside the control chamber (3) facing one of the seals (1, 2), and an additional sensor (9) for the tracer gas is connected to the second duct (6).

4. A method for monitoring a device for sealing off a body, in particular a rubbish dump, having two mutually spaced-apart seals (1, 2) defining a control chamber (3) therebetween which is closed except for connections, a first and a second duct (5, 6) in the control chamber (3) communicating by means of a permeable channel or hose (16) for a transport medium, at the outlet side of which channel or hose a substance to be monitored is detected, characterised in that a gas present in the body is monitored at the second duct (6), the liquid level is measured in the control chamber (3) and the pressure variation over time is monitored in the sealed control chamber (3) after varying the pressure.

5. A method according to claim 4, characterised in that one of the seals (1, 2) is acted upon by tracer gas when the level in the control chamber (3) rises, and the emergence of the tracer gas is monitored at the outlet opening (6).

## Revendications

1. Dispositif de scellement d'un corps (K), en particulier d'une décharge, pouvant être surveillé, comportant deux éléments de scellement (1, 2) distancés l'un de l'autre, entre lesquels se trouve un espace de contrôle (3) qui, hormis des raccordements, est fermé, un premier et un deuxième passage (5, 6) ménagés dans l'espace de contrôle (3) étant reliés par un canal ou tuyau (16) perméable destiné à un moyen de transport, auquel est raccordé du côté de la sortie un palpeur (8) pour une substance à surveiller, le palpeur (8) étant sensible à un gaz disponible dans le corps (K), caractérisé en ce qu'un indicateur de niveau (10) de liquide est disposé dans l'espace de contrôle (10) et en ce qu'une pompe (11) et un manomètre (14) sont raccordés à l'espace de contrôle (3).

2. Dispositif selon la revendication 1, caractérisé en ce que la pompe (11) et le manomètre (14) sont disposés chacun au niveau d'une ouverture (17, 18) susceptible d'être obturée.

3. Dispositif selon l'une des revendications 1 ou 2, caractérisé en ce qu'il existe une lance (15) destinée à l'amenée de gaz traceur, laquelle peut être disposée à l'extérieur de l'espace de contrôle (3), orientée vers l'un des scellements (1, 2), et en ce qu'un palpeur supplémentaire (9) pour le gaz traceur est raccordé au deuxième passage (6).

4. Procédé pour la surveillance d'un dispositif de scellement d'un corps, en particulier d'une décharge, le dispositif comportant deux éléments de scellement (1, 2) distancés l'un de l'autre, entre lesquels se trouve un espace de contrôle (3), qui, hormis des raccordements, est fermé, un premier et un deuxième passage (5, 6) ménagés dans l'espace de contrôle (3) étant reliés par un canal ou tuyau (16) perméable destiné à un moyen de transport, à la sortie duquel est analysé une substance à surveiller, caractérisé en ce qu'un gaz disponible dans le corps est surveillé au deuxième passage (6), en ce que le niveau de liquide est mesuré dans l'espace de contrôle (3) et en ce qu'après modification de la pression, la pression modifiée temporaire est surveillée dans l'espace de contrôle (3) fermé.

5. Procédé selon la revendication 4, caractérisé en ce que, lorsque le niveau de remplissage dans l'espace de contrôle (3) est élevé, l'un des scellements (1, 2) est alimenté en gaz traceur et en ce que l'apparition du gaz traceur est surveillée à l'orifice de sortie (6).
